Europäisches Patentamt

European Patent Office

Office européen des brevets

(11) Publication number: 0 156 246
A1

# EUROPEAN PATENT APPLICATION

(21) Application number: 85102857.1

(22) Date of filing: 13.03.85

(51) Int. Cl.⁴: G 09 F 9/30
G 02 F 1/133

(30) Priority: 14.03.84 JP 49869/84

(43) Date of publication of application:
02.10.85 Bulletin 85/40

(84) Designated Contracting States:
CH DE GB LI

(71) Applicant: Hitachi Maxell Ltd.
No 1-1-88, Ushitora Ibaraki-shi
Osaka-fu(JP)

(72) Inventor: Ishida, Osamu
3-9, Minamikasugaoka 2-chome
Ibaraki-shi Osaka-fu(JP)

(74) Representative: von Kreisler, Alek, Dipl.-Chem. et al,
Deichmannhaus am Hauptbahnhof
D-5000 Köln 1(DE)

(54) Display device.

(57) In a display device of the type having a transparent plate located in front of a display unit, there is provided a diffused reflection made of plastic resin material including fillers with the surface of the layer formed in rough surface by fine projections and recesses for causing incident light diffused reflection so as to prevent glittering of the display surface, whereby the pattern on the display device can be read from any angles.

Fig. 2

Croydon Printing Company Ltd

TITLE OF THE INVENTION

DISPLAY DEVICE


FIELD OF THE INVENTION

The present invention relates to a display device having its display surface made transparent.


BACKGROUND OF THE INVENTION

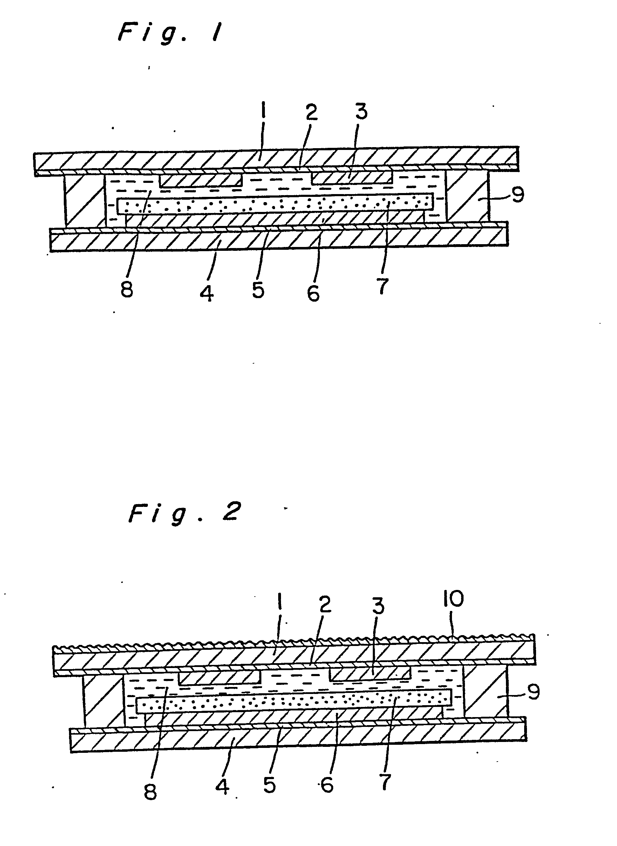

In an electrochromic display device, there is provided a transparent plate 1 covering the front surface of an electrochromic display element as shown in Fig. 1. In the conventional display device, as the transparent covering plate, a glass plate or a plastic film having a smooth surface has been used, therefore, the ambient light incident to the transparent plate is fully reflected depending on the incident angle of the light, whereby there sometimes occurs such a defect that the display of the display element can not clearly recognized.

In order to solve the above problem, there has been proposed to form a rough surface in the front surface of the transparent plate by means of plasma etching or the like, to coat non reflective coating of multiple layers or to attach a mesh filter in the front surface of the transparent plate 1. However, theses conventional way are expensive and tend to harm brightness of display, clearness or sharpness and contrast. Therefore, the prior arts mentioned above can not fully solve the disadvantage.

## SUMMARY OF THE INVENTION

An essential object of the present invention is to provide a display device which enables to surely prevent light reflection and glittering on the front surface of the display device with a low cost and simple construction so that the displayed content can be clearly recognized.

According to the present invention, in a display device of the type having a transparent plate located in front of a display unit, there is provided a transparent layer made of plastic resin material including fillers with the surface of the layer formed in rough surface by fine projections and recesses for causing incident light diffused reflection. The transparent resin layer is referred to as a diffused reflection layer hereinafter.

As the resin material for the diffused reflection layer having fine projections and recesses, acrylic resin, UV curing resin, silicone resin, polyvinyl formal resin polyethylene, polypropylene may be used.

As the filler material for making the fine projections and recesses on the surface of the diffused reflection layer, inorganic powder such as silica powder, aluminum hydroxide powder, glass beads or glass powder may be used. Also, as the filler material, organic powder such as polyethylene powder or polyvinyl chloride powder may be used. It is not essential that the filler per se is transparent but sufficient that the filler material can act as transparent material due to the similarity of the refractive index of the resin for the diffused reflection layer when the filler material is mixed in the transparent resin material.

The particle size of the filler material may be preferably within the range of about 5 to 100 microns. If the particle size is smaller than the range described above, a desired roughness of the diffused reflection layer can not be expected. On the other hand, if the particle size is larger than the range described above, the pattern displayed by the display device tends to be dim and quality of the displayed pattern is lowered.

In a case where the amount of the filler contained in the transparent resin material is less, it becomes difficult to form a desired projection of the diffused reflection and if the amount of the filler is much, the quality of the displayed pattern becomes bad. Therefore, the amount of the filler may be desired within 5 to 50 by weight with respect to the amount of the transparent resin material of 100 weight.

The diffused reflection layer may be formed by coating mixture of filler and resin material, under existence of solvent if necessary, on the surface of the outer surface of the display device by means of various conventional coating process such as spray coating, screen printing, roll or brush painting or wire bar coating. If the diffused reflection layer is thinner than a predetermined thickness, the mechanical strength and diffusion of light are lowered. On the other hand, if the diffused reflection layer is thicker than the predetermined thickness, it becomes difficult to form the rough surface, therefore, the thickness of the diffused reflection layer is preferably in the range 20 to 200 microns. The diffused reflection layer may be formed before and/or after the essential components of the display device are assembled. However if it is formed before the display device is assembled, the diffused reflection layer may be harmed by undesired contact with foreign matters, preferably the diffused reflection layer is formed after the essential component of the display device are assembled.

BRIEF DESCRIPTION OF THE DRAWINGS

Fig. 1 is a cross sectional view showing an example of a conventional electrochromic display device, and

Fig. 2 is a cross sectional view showing one embodiment of an electrochromic display device according to the present invention.

DETAILED DESCRIPTION OF THE PREFERRED EMBODIMENTS

0156246

Referring to Fig. 2, a top glass plate 1 made of transparent glass plate with the surface thereof smoothed is laid at the displaying surface of an electrochromic display device in which a transparent conducting film made of indium tin oxide (referred to as ITO) is laid on the inner surface of the glass plate 1. One or more display electrodes 3 made of electrochromic material are formed on inner surface of the conducting film 2 to provide one or more patterns to be displayed. As the electrochromic material of the display electrode 3, WO3 is used in the example.

A bottom glass plate 4 is opposed to the top glass plate spaced by spacers 9. Another transparent conducting film made of ITO material is laid on the inner surface of the bottom glass plate 4. A counter electrode 6 is laid on the conducting film 5. The counter electrode 6 is made of ferric tungstate ($Fe_2(WO_4)_3$) with conductive assistant and binding agent added. A porous reflective sheet 7 is laid on the counter electrode 6. The porous reflective sheet 7 is made of ion permeable polytetrafluoroethylene film containing titanium dioxide dispersed. The space between the top and bottom glasses 1 and 4 is filled with electrolyte 8 of propylenecarbonate containing LiClO4 of 1.0 mol per liter dissolved therein with a small amount of water added.

The electrochromic display device as mentioned above can display a desired pattern on the top glass plate 1 by application of the suitable voltage between the conducting films 2 and 5.

A diffused reflection layer 10 is formed on the outer surface of the top glass plate 1, having the outer surface of the diffused reflection layer 10 made rough by fine projections and/or recesses uniformly for diffusing incident light, thereby preventing glittering of the surface of the display device, assuring reading of the pattern displayed on the display device from any angles.

EXAMPLE 1

Powder of aluminum hydroxide (Al $(OH)_3$) of 2 gram having an average grain diameter 50 microns was added to alcohol 10 gram and mixed and first suspension thereof is obtained by application of ultrasonic vibration. Furthermore, UV curing resin (UV curing resin 3066 type made of THREE BOND CO.) of 20 grams of a viscosity 230 cP was mixed thereto and processed by the ultrasonic vibration and second suspension of the above three components was obtained. The second suspension was coated on the transparent glass plate 1 of the display device to form the diffused reflection layer 10 by way of wire bar coating with a thickness of 100 microns when dried. After coating, the diffused reflection layer 10 was put under 20 cm from an ultraviolet radiation lamp of 4 KW and the diffused reflection layer 10 was subjected to the ultraviolet radiation for 20 seconds for curing thereof.

Thus the rough or irregular surface was formed on the outer surface of the display device by fine projections and/or recesses of the aluminum hydroxide of the diffused reflection layer, so as to diffuse the incident light for all angles, thereby preventing glittering of the surface of the display device, then enabling a clear reading of the pattern displayed on the display device from any angles. Also, since the projections and recesses of the rough surface of the diffused reflection layer were fine, dimming of displayed pattern did not occur keeping a good display quality.

EXAMPLE 2

Silica ($SiO_2$) powder having particle size of 30 microns 4.5 g, poly-2-hydroxy ethyl methacrylate (HEMA) 28.6 g and 2-(2'hydroxy-5-methylphenyl) benztriazole 0.3 g were mixed and dispersed in toluene 66.6 g. The above mentioned mixture 100 g was prepared as a main material.

Mixture of toluenediisocianate (TDI) and toluene 4.5 g was prepared as curing agent.

The main material and the curing agent are mixed by the ratio 10:1 and the material thus mixed were coated on the glass plate 1 of the display device by spray with a thickness of 100 microns when dried and a density of 0.3

$mg/cm^2$. After coating the diffused reflection layer was dried by air blowing for 20 hours.

Thus the rough or irregular surface was formed on the outer surface of the display device by fine projections and/or recesses by the silica powder of the diffused reflection layer, so as to diffuse the incident light for all angles, thereby preventing glittering of the surface of the display device, then enabling a clear reading of the pattern displayed on the display device from any angles. Also, since the projections and recesses of the rough surface of the diffused reflection layer were fine, dimming of displayed pattern did not occur keeping a good display quality.

EXAMPLE 3

Polyethylene powder 2g having particle size of 30 microns was mixed and dispersed in the ultraviolet hardening resin 20g same as that of in the Example 1 and the mixture was coated on the glass plate 1 of the display device by means of a spray gun with a thickness of about 50 microns when dried. The coated layer was dried and cured by UV rays in the same manner as in the example 1.

Thus the rough or irregular surface was formed on the outer surface of the display device by fine projections and/or recesses by the polyethylene grains of the diffused reflection layer, so as to diffuse the incident light for all angles, thereby preventing glittering of the surface of the display device, then enabling a clear reading of the pattern displayed on the display device from any angles. Also, since the projections and recesses of the rough surface of the diffused reflection layer were fine, dimming of displayed pattern did not occur keeping a good display quality.

EXAMPLE 4

Glass beads 2g having particle size of 40 microns were mixed and dispersed in 10g of binding agents of silicon resin containing solid component of 50% by weight with a viscosity 150 cP. The mixture was coated on the glass plate 1 of the display device by means of wire bar with a .thickness of 50 microns when dried and the diffused reflection layer was formed on the glass plate 1 was dried under ambient temperature 24 hours.

Thus the rough or irregular surface was formed on the outer surface of the display device by fine projections and/or recesses by the glass beads of the diffused reflection layer, so as to diffuse the incident light for all angles, thereby preventing glittering of the surface of the display device, then enabling a clear reading of the pattern displayed on the display device from any angles. Also, since the projections and recesses of the rough surface of the diffused reflection layer were fine, dimming of displayed pattern did not occur keeping a good display
quality.

EXAMPLE 5

Polyvinylchloride powder 2g having an average
particle size of 20 microns was mixed and dispersed in 20g
of UV curing resin in the same manner as in the example 1
and the mixture was coated on the outer surface of the glass
plate 1 of the display device by a spray gun with a
thickness of about 50 microns when dried and the diffused
reflection layer was dried by ultraviolet rays in the same
manner as in the example 1.

Thus the rough or irregular surface was formed on
the outer surface of the display device with fine
projections and/or recesses by the grains of the
polyvinylchloride of the diffused reflection layer, so as to
diffuse the incident light for all angles, thereby
preventing glittering of the surface of the display device,
then enabling a clear reading of the pattern displayed on
the display device from any angles. Also, since the
projections and recesses of the rough surface of the
diffused reflection layer were fine, dimming of displayed
pattern did not occur keeping a good display quality.

EXAMPLE 6

Glass powder 2g having an average particle size of 60 microns was mixed and dispersed in the silicon resin system binding agent 10g in the same manner as the example 4. The mixture was coated on the glass plate 1 of the display device by means of wire bar with a thickness of 100 microns when dried and the diffused reflection layer was formed on the glass plate 1 was dried under ambient temperature 24 hours.

Thus the rough or irregular surface was formed on the outer surface of the display device by fine projections and/or recesses by the glass powder of the diffused reflection layer, so as to diffuse the incident light for all angles, thereby preventing glittering of the surface of the display device, then enabling a clear reading of the pattern displayed on the display device from any angles. Also, since the projections and recesses of the rough surface of the diffused reflection layer were fine, dimming of displayed pattern did not occur keeping a good display quality.

It is noted that the diffused reflection layer 10 may be formed on the display surface of the various display device such as a liquid crystal display device, a cathode ray tube and an electroluminescent panel.

0156246

WHAT IS CLAIMED IS

1    A display device comprising a display surface and a transparent plate provided on said surface characterized in that said transparent plate is covered with a transparent resin layer, the outer surface of which is formed with a rough surface by filler material contained in the resin layer.

2.    The display device according to claim 1, wherein the filler material is aluminum hydroxide powder.

3.    The display device according to claim 1, wherein the filler material is polyethylene powder.

4.    The display device according to claim 1, wherein the filler material is glass beads.

5    the display device according to claim 1, wherein the filler material is polyvinylchloride powder.

6.    The display device according to claim 1, wherein the filler material is glass powder.

7.    The display device according to claim 1, wherein the filler material is silica powder.

0156246

Fig. 1

Fig. 2

## EUROPEAN SEARCH REPORT

Application number

| | | | |
|---|---|---|---|
| **DOCUMENTS CONSIDERED TO BE RELEVANT** | | | EP 85102857.1 |

| Category | Citation of document with indication, where appropriate, of relevant passages | Relevant to claim | CLASSIFICATION OF THE APPLICATION (Int Cl 4) |
|---|---|---|---|
| A | US - A - 4 218 302 (DALISA et al.)<br>* Totality *<br>-- | 1 | G 09 F 9/30<br><br>G 02 F 1/133 |
| A | EP - A1 - 0 039 770 (VDO)<br>* Claim 1; fig. 1 *<br>-- | 1 | |
| A | AT - B - 242 977 (CIBA)<br>* Page 1, line 38 - page 2, line 20; page 5, lines 38-41; fig. 2 *<br>-- | 1,7 | |
| A | DE - B2 - 2 721 885 (BAYER)<br>* Claim; column 2, lines 2-67 *<br>---- | 1,4 | |

| TECHNICAL FIELDS SEARCHED (Int Cl 4) |
|---|
| G 09 F 9/00 |
| G 02 F 1/00 |
| G 02 B 5/00 |

The present search report has been drawn up for all claims

| Place of search | Date of completion of the search | Examiner |
|---|---|---|
| VIENNA | 07-06-1985 | BAUMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82